# EUROPÄISCHE PATENTSCHRIFT

(11) **EP 1 957 317 B1**
(45) Veröffentlichungstag und Bekanntmachung des Hinweises auf die Patenterteilung: **03.11.2010**
(21) Anmeldenummer: 06776805.1
(22) Anmeldetag: 11.08.2006
(51) Int. Cl.: B60R 13/08

(54) **SCHUTZSCHILD ZUR THERMISCHEN UND AKUSTISCHEN ABSCHIRMUNG VON BAUTEILEN EINER VERBRENNUNGSKRAFTMASCHINE**
PROTECTIVE SHIELD FOR THERMAL AND ACOUSTIC SHIELDING OF COMPONENTS OF AN INTERNAL COMBUSTION ENGINE
ECRAN DE PROTECTION POUR BLINDAGE THERMIQUE ET ACOUSTIQUE DE COMPOSANTS D'UN MOTEUR A COMBUSTION INTERNE

(30) Priorität: 06.12.2005 DE 102005058253
(43) Veröffentlichungstag der Anmeldung: 20.08.2008
(73) Patentinhaber: Federal-Mogul Sealing Systems GmbH, 57562 Herdorf (DE)
(72) Erfinder: KRUS, Ralf, 51789 Lindlar (DE)
(74) Vertreter: Becker Kurig Straus
(86) Internationale Anmeldenummer: PCT/EP2006/007991
(87) Internationale Veröffentlichungsnummer: WO 2007/065491

(56) Entgegenhaltungen:
- EP-A- 0 643 203
- WO-A-2004/098808
- US-A- 5 196 253
- US-A- 5 550 338

## Beschreibung

Die vorliegende Erfindung betrifft einen mehrlagigen Schutzschild, der zur thermischen und akustischen Abschirmung von Bauteilen einer Verbrennungskraftmaschine, so wie Turboladern, Katalysatoren, Abgaskrümmern und dergleichen dient.

Derartige Schilde werden an Kraftfahrzeugen, aber auch vergleichbaren Maschinen, zur Hitze- und Schall-Abschirmung von Bauteilen verwendet. Solche Bauteile sind hauptsächlich Bestandteile der Auspuffanlage, also Katalysatoren, Auspuffkrümmer, Turbolader und dergleichen. Die Schilde sollen die hohen Temperaturen und den durch auftretende Schwingungen entstehenden Schall von dem Innenraum des Fahrzeugs abschirmen. Um die immer strengeren Vorschriften hinsichtlich des Außenschallpegels von Fahrzeugen zu erfüllen, sollen die Schilde ferner Geräusche möglichst absorbieren, d.h. nicht einfach reflektieren.

Da die genannten Bauteile im Betrieb sehr heiß werden können, ist eine thermische Abschirmung unerlässlich, um Beeinträchtigungen von anderen Fahrzeugteilen durch die hohen Temperaturen zu verhindern. Eine Anwendung kann allerdings auch darin bestehen, in umgekehrter Weise den Abschnitt der Abgasanlage vom Motor bis zum Katalysator thermisch abzuschirmen. Da solche Abgaskatalysatoren für ihre einwandfreie und bestmögliche Funktion eine bestimmte Mindesttemperatur benötigen, kann durch eine solche "umgekehrte" Abschirmung ein schnelleres Erreichen der Betriebstemperatur erreicht werden. Dadurch können die Abgaswerte des entsprechenden Fahrzeugs verbessert werden.

Entsprechende Schilde können ebenso im Motorraum Verwendung finden, um Bauteile wie beispielsweise Kunststoffschläuche, elektrische Leitungen, Motorelektronik etc. vor zu hohen Temperaturen zu schützen.

Um eine thermische Abschirmung zu erreichen, gibt es mehrere Möglichkeiten. Eine davon besteht in der Verwendung von Wärme-dämmenden Materialien in dem Schild, beispielsweise schaumartigen Materialien oder Faserwerkstoffen, die wegen ihres vergleichsweise großen Gehaltes an Luft Wärme schlecht leiten.

Eine andere oder zusätzliche Möglichkeit ist es, die Wärmestrahlung von heißen Bauteilen an der Abschirmung zu reflektieren, was etwa durch metallische Beschichtungen erreicht werden kann. Eine solche Reflexion kann am einfachsten durch ein massives Blech erreicht werden. Solche luft- und somit schallundurchlässigen Bleche sind aber im Bezug auf Schallisolierung nachteilig, da der Schall im Wesentlichen vollständig reflektiert wird. In ungünstigen Fällen kann sogar eine Resonanz hervorgerufen werden, die Dröhnen und ähnliche ungewünschte akustische Effekte bewirkt.

Eine akustische Abschirmung kann durch spezielle Schall schluckende Oberflächenstrukturen erhalten werden, dies ist aber in der Regel schwierig herzustellen und/oder benötigt gewisse Mindestdicken der entsprechenden Lagen, was bei den teilweise beengten Verhältnissen in modernen Fahrzeugen nachteilig ist.

Eine andere Möglichkeit besteht daher darin, ein Material mit durchlässigen Poren zu verwenden. Innerhalb solcher Poren kann die mechanische Energie von Schallwellen durch Reibung in Wärme umgesetzt werden, so dass eine akustische Abschirmung erhalten wird. Durch den Gehalt an Luft in den Poren wird darüber hinaus auch eine thermische Isolierung erreicht.

Eine Abschirmung, die sowohl gute akustische als auch thermische Abschirmeigenschaften aufweisen soll, wird daher gemäß den vorstehend diskutierten Problemen in der Regel aus verschiedenen Materialien zusammengesetzt sein. Darüber hinaus muss eine derartige Abschirmung auch noch weitere mechanische Eigenschaften aufweisen. Darunter fällt die Stabilität gegenüber den beim Betrieb eines Fahrzeugs auftretenden mechanischen Belastungen, also etwa die Dauerfestigkeit der Befestigungspunkte. Weiterhin soll ein Einbau einer solchen Abschirmung möglichst einfach und sicher sein, d.h. es wird bevorzugt, dass keinerlei scharfe Kanten vorhanden sind, die Verletzungen von Personen oder Beschädigungen an anderen Fahrzeugteilen verursachen können.

Eine mehrlagige Abschirmung, die Lagen aus verschiedenen Materialien aufweist, sollte ferner möglichst einfach und mit wenigen Schritten herstellbar sein.

Die Druckschrift EP 0 643 203 A1 offenbart ein Schall isolierendes Hitzeschild-Element für einen Abgaskrümmer. Das Element ist in einer vorgegebenen dreidimensionalen Form gestaltet und umfasst eine Metalltraizschicht einen nichtgewobenen Stoff, der auf der Außenseite der Metalltragschicht angebracht ist, die zum Abgaskrümmer weist, und ein Drahtgewebe aus Metalldrähten, das über dem nichtgewobenen Stoff angeordnet und an der Metalltragschicht befestigt ist.

Es ist daher eine Aufgabe der vorliegenden Erfindung, einen Hitze- und Schall-Schutzschild bereitzustellen, der sowohl gute thermische als auch akustische Abschirmeigenschaften und eine gute mechanische Stabilität aufweist, der einfach hergestellt und gehandhabt werden kann.

Gemäß einem Aspekt der vorliegenden Erfindung wird ein Schutzschild zur thermischen und akustischen Abschirmung eines Bauteils einer Verbrennungskraftmaschine gemäß Anspruch 1 bereitgestellt. Vorteilhafte Fortbildungen sind in den abhängigen Ansprüchen angegeben.

Durch diese Anordnung wird eine wirksame akustische/thermische Abschirmung bereitgestellt, die einfach herzustellen ist, eine gute mechanische Stabilität aufweist, und ohne die Gefahr von Verletzungen von Personen bzw. Beschädigungen von anderen Fahrzeugteilen gehandhabt werden kann.

In einer bevorzugten Ausführungsform weist das Metallnetz eine Vertiefung auf, wobei die mindestens eine Absorberlage innerhalb dieser Vertiefung angeordnet ist. Wie in der folgenden Beschreibung bevorzugter Ausführungsformen detaillierter dargestellt wird, bietet diese Ausführung sowohl Vorteile bezüglich der Herstellung als auch der Betriebseigenschaften der erfindungsgemäßen Abschirmung.

In einer bevorzugten Ausführungsform beträgt der Abstand zwischen dem Metallnetz und dem Trägerblech innerhalb der Vertiefung mindestens etwa 5 mm.

In einer bevorzugten Ausführungsform beträgt die Gesamtfläche der Durchgangsöffnungen in dem Metallnetz zwischen etwa 20 bis etwa 30 % der Gesamtfläche des Metallnetzes.

In einer bevorzugten Ausführungsform ist das Trägerblech ein aluminiertes Stahlblech mit einer Dicke von etwa 0,4 mm ist. Die Beschichtung kann als Korrosionsschutz vorgesehen werden, aber auch die Wärmereflexion des Schildes verbessern.

In einer bevorzugten Ausführungsform weist das Metallnetz ein Drahtgeflecht aus aluminiertem Metalldraht auf. Ein Drahtgeflecht ist einfach und kostengünstig herstellbar und kann durch die Aluminierung vor Korrosion geschützt werden, wobei die Beschichtung auch vorteilhaft sein kann, um die Wärmereflexion zu erhöhen. In einer anderen bevorzugten Ausführungsform weist das Metallnetz ein Drahtgeflecht aus verzinktem Metalldraht auf. In einer weiteren bevorzugten Ausführungsform weist das Metallnetz ein Drahtgeflecht aus Edelstahldraht auf, wobei hier keinerlei Korrosionsschutz nötig ist.

Das Schall-absorbierende Material umfasst einen Faserwerkstoff, der Basaltwolle mit einem spezifischen Gewicht von etwa 960 g/m³ ist.

In einer bevorzugten Ausführungsform ist die mindestens eine Absorberlage eine mehrschichtige Verbundlage.

In einer bevorzugten Ausführungsform weist das Trägerblech auf der Seite, die der mindestens einen Absorberlage zugewandt ist, eine Schall absorbierende Oberflächenstruktur aufweist. Dadurch kann die Schallabsorption verbessert werden.

In einer bevorzugten Ausführungsform sind im Randbereich Befestigungsmittel vorgesehen, um den Schutzschild anzubringen. Der Randbereich ist besonders geeignet, um hierin solche Befestigungsmittel vorzusehen, aufgrund der guten Stabilität und Dauerhaltbarkeit im umgefalzten Bereich.

Im Folgenden wird die vorliegende Erfindung unter Bezug auf die beigefügten Zeichnungen detaillierter erläutert werden, wobei
Fig. 1 eine Ausführungsform der vorliegenden Erfindung im Querschnitt zeigt; und
Fig. 2 eine alternative Ausführungsform der vorliegenden Erfindung im Querschnitt zeigt.

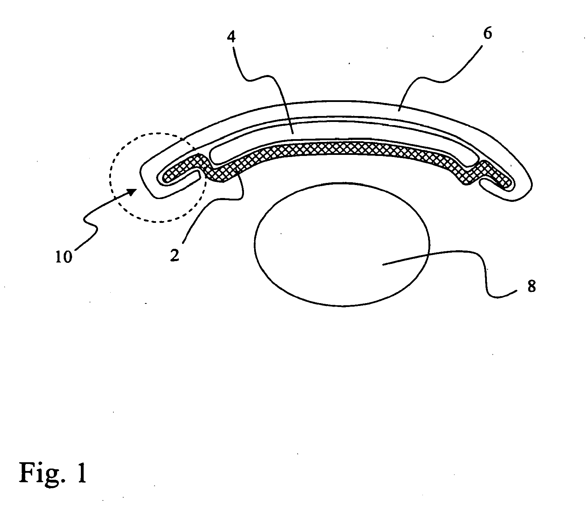

In Figur 1 ist eine Ausführungsform des erfindungsgemäßen Schutzschilds in einer Querschnittsansicht gezeigt, der als Abschirmung eines Bauteils 8 einer Verbrennungskraftmaschine angeordnet ist. Das Bauteil 8 kann beispielsweise ein Turbolader, Katalysator oder anderes Bauteil sein, welches im Betrieb heiß wird, also eine Wärmequelle darstellt. Mit der Wärmeabgabe ist häufig auch eine Schallabstrahlung verbunden, wie es etwa bei Schalldämpfern oder Turboladern der Fall ist.

Im Folgenden wird im Zusammenhang mit der vorliegenden Erfindung der Begriff "Porosität" verwendet. Also Porosität ist erfindungsgemäß der Anteil des Metallnetzes oder -geflechts zu verstehen, der durchlässig ist, d.h. der Anteil der Fläche einer solchen Lage, der von Durchgangsöffnungen eingenommen wird, bezogen auf die Gesamtfläche der jeweiligen Lage.

Der Wärmequelle 8 zugewandt befindet sich ein durchlässiges Metallnetz 2, so wie ein Drahtgeflecht oder Maschenwerk. Das Metallnetz 2 weist also Durchgangsöffnungen auf, ist somit "porös" oder auch luftdurchlässig. Auf der Seite des Metallnetzes 2, die dem Bauteil 8 abgewandt ist, befindet sich mindestens eine Absorberlage 4, die ein Schall-Absorptions-Funktion besitzt. Diese Lage 4 kann eine Verbundlage sein. Abgeschlossen wird das erfindungsgemäße Abschirmelement durch ein Trägerblech 6.

Das Trägerblech 6 ist in seinem Randbereich 10 (durch den gestrichelten Kreis angedeutet) um die Lage 2 umgefalzt. In der hier gezeigten Ausführungsform ist der Randbereich 10 nur um die Metallnetz-Lage 2 umgefalzt. Das Metallnetz 2 bildet eine Vertiefung oder auch Tasche, in welcher sich die Absorberlage 4 befindet. Die Ausbildung einer solchen Tasche erleichtert den Herstellungsvorgang des erfindungsgemäßen Abschirmelements, da die Absorberlage hier leicht eingelegt werden kann und somit auch bereits vorläufig fixiert ist. D.h. es ist einfacher, die Lagen bei der Herstellung des Schilds passgenau übereinander anzuordnen als ohne eine solche Tasche.

Jedoch ist die Erfindung nicht auf diese Ausführungsform beschränkt; in anderen (nicht gezeigten) Ausführungsformen ist eine solche Tasche nicht vorhanden, hier liegen Absorberlage 4 und Metallnetz-Lage 2 über deren gesamte Fläche übereinander. In diesem Fall ist das Trägerblech 6 dann auch um die Kanten beider Lagen 2, 4 umgefalzt. Da hier die Absorberlage an ihren Kanten zusätzlich zwischen Trägerblech 6 und Metallnetz-Lage 4 eingespannt ist, kann mit einer solchen Ausführungsform ein Verrutschen der Absorberlage 4 wirksam verhindert werden.

Der erfindungsgemäße Schutzschild besitzt eine doppelte Abschirmwirkung gegen Wärme- und Schallabstrahlung. Dabei ist anzumerken, dass für Wärmestrahlung eine andere Art der Abschirmung gewünscht ist als für Schall. Während es bei der Wärmestrahlung wünschenswert ist, diese in einem möglichst großen Ausmaß zu reflektieren, d.h. an die Umwelt abzugeben, ist bei Schall genau der gegenteilige Effekt erwünscht. Schallwellen sollen nicht reflektiert werden, was die Außengeräusche des Fahrzeugs erhöht und auch in ungünstigen Fällen zu Resonanzen ("Dröhrien") führen kann, sondern stattdessen möglichst vollständig absorbiert werden.

Einerseits werden in dem Metallnetz 2 (mechanische) Schallwellen durch Reibung in Wärme umgewandelt, andererseits wird auch durch den nicht durchlässigen Anteil der Fläche des Metallnetzes 2 (elektromagnetische) Wärmestrahlung zu einem gewissen Grad reflektiert. Dieser Effekt kann durch geeignete Beschichtung noch verstärkt werden. Die Absorberlage 4 ist vorgesehen, um verbleibenden Schall und die Restwärme (die auch durch Konvektion übertragen wird) zu absorbieren. Das Trägerblech 6 bildet dann die abschließende Barriere für Schall und Wärme.

Durch den Abstand zwischen Trägerblech 6 und Metallnetz 2 (je nach Ausführungsform innerhalb der ausgebildeten Tasche oder in anderen Ausführungsformen über die gesamte Fläche) kann die Wirksamkeit der Abschirmung für bestimmte Frequenzbereiche angepasst werden. Größere Abstände verschieben die Frequenzabsorptionskurve hin zu niedrigeren Frequenzen und umgekehrt. Dies ist vorteilhaft, da je nach abzuschirmendem Bauteil ein spezifischer Frequenzbereich abgedeckt werden kann. So treten beispielsweise bei Turboladern aufgrund deren hoher Drehzahl eher hohe Frequenzen auf ("Pfeifen"), während andere Abschnitte der Auspuffanlage vergleichsweise niedrigere Frequenzen erzeugen.

In der Ausführungsform, die in Fig. 1 gezeigt ist, kann dieser Abstand vorteilhaft durch die Tiefe der Tasche festgelegt werden. Da Metallnetz und Trägerblech in der Regel deutlich druckstabiler sein werden als die beispielsweise aus Schäumen bestehende Absorberlage, kann so ein definierter Abstand für den vorgesehenen Frequenzbereich leicht aufrechterhalten werden, wohingegen ohne eine solche Tasche die Absorberlage stärker deformierbar ist. Durch die Deformation, d.h. Abflachung der Absorberlage, würde der definierte Abstand geändert bzw. verringert, so dass andere als die gewünschten Frequenzen absorbiert würden, wobei die eigentlich abzuschirmenden Frequenzen dann in einem unerwünschten höheren Maß durchgelassen würden.

Durch die in Fig. 1 gezeigte Ausführungsform wird also ein formstabiler Schutzschild erhalten, der auch im Betrieb den Abstand zwischen Trägerblech und Metallnetz nicht wesentlich verändern wird. Das Umfalzen bzw. Umbördeln des Trägerblechs ermöglicht eine einfache und kostengünstige Herstellung des mehrlagigen Schutzschilds. Ferner wird die Handhabung vor allem beim Montieren erleichtert, da der umgefalzte Bereich scharfe Kanten des Metallnetzes umgibt. In dem Randbereich können auch in einfacher Weise Befestigungsmittel vorgesehen werden (nicht gezeigt), die eine sichere Befestigung des Schutzschildes ermöglichen und keine Tendenz zeigen, im Dauerbetrieb auszureißen. Solche Befestigungsmittel können etwa Bohrungen für Schrauben, Nieten oder dergleichen sein, die im Randbereich vorgesehen sind.

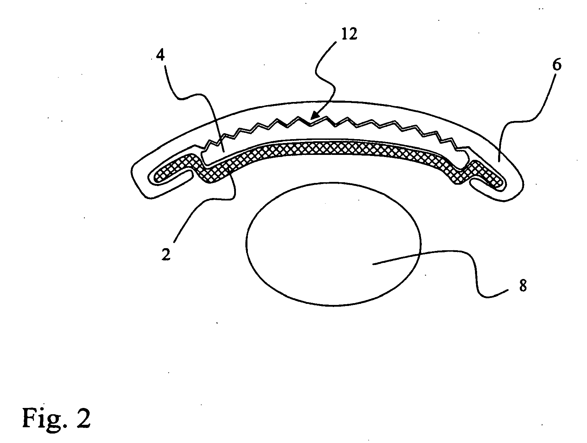

In Fig. 2 ist eine alternative Ausführungsform des Schutzschildes von Fig. 1 gezeigt. Hier ist zusätzlich auf der Innenseite des Trägerblechs 6 eine Schall absorbierende Oberflächengestaltung bzw. -struktur 12 vorhanden. Diese Struktur 12 kann beispielsweise durch Einstanzungen oder dergleichen in das Trägerblech 6 eingebracht werden. Dadurch wird die Schallabsorption der erfindungsgemäßen Abschirmung weiter verbessert. Ein zusätzlicher Vorteil mit einer Struktur wie sie hier gezeigt ist, besteht darin, dass ein Verrutschen der Absorberlage 4 zusätzlich vermindert werden kann. Durch Vorsehen einer Oberflächenstruktur kann auch die Anpassung der Absorptionskurve verbessert werden.

In allen Ausführungsformen der Erfindung kann eine Anpassung der Schallabsorption auch einfach dadurch erhalten werden, dass das Metallnetz auf eine gewünschte Porosität gewalzt wird, d.h. die Porengröße durch Walzen oder dergleichen auf gewünschte Werte gebracht wird.

Von der vorliegenden Erfindung wird ein mehrlagiger Hitzeschutzschild zur Anwendung im Fahrzeugmotorbereich beschrieben, zur thermischen und akustischen Abschirmung heißer Bauteile wie z.B. Turbolader, Abgaskrümmer etc. Die Schall absorbierend wirkende Hitzeabschirmung weist mindestens drei Lagen auf.

Dabei ist die der Schall-/Wännequelle zugewandte Lage ein Metallnetz, z.B. ein Metalldrahtgeflecht oder auch Maschenwerk. Hierauf folgen eine oder mehrere Lagen eines Absorbermaterials zur Schallabsorption. Abschließend folgt auf die Absorberlage(n) ein Metallblech (etwa ein aluminiertes Stahlblech mit Dicke 0,4 mm), welches den Lagenverbund durch Umfalzen des Randbereiches zumindest um das Metallnetz herum zusammenhält.

Es wird dadurch verhindert, dass eine freiliegende Kante des Maschenwerks eine Scharfkantigkeit bewirkt und somit eine potenzielle Verletzungsgefahr bzw. das Risiko einer Beschädigung anderer Fahrzeugteile darstellt. Der umgefalzte Randbereich sorgt für eine leichtere und sicherere Handhabung bei der Montage der erfindungsgemäßen Abschirmung. Das Umfalzen verleiht der Abschirmung auch eine höhere Steifigkeit und eine erhöhte Dauerhaltbarkeit im Motorendauerlaufbetrieb.

Die Metalldrahtgeflechtlage kann sowohl als regelmäßiges als auch als unregelmäßiges Maschenwerk ausgeführt sein, d.h. die Größe und Anordnung der Durchgangsöffnungen oder auch "Poren" ist entweder regelmäßig oder unregelmäßig. "Porosität" ist im Sinne der vorliegenden Erfindung zu verstehen als die Gesamtfläche der Durchgangsöffnungen, bezogen auf die Gesamtfläche der Geflechtlage. Das Maschenwerk ist durch seine Porosität (20 bis 30 %) in der Lage, auftreffende Schallwellen durch Reibung in Wärme umzuwandeln und somit zu dämpfen.

Hierbei können die regelmäßigen oder unregelmäßigen Abstände bzw. die Größe der Poren des Maschenwerkes je nach Frequenzbereich der abzuschirmenden Schallwellen ausgelegt werden. Eine zusätzliche Möglichkeit zur Beeinflussung der Porosität (Anpassung an unterschiedliche Frequenzen) des Maschenwerkes kann durch ein Flachwalzen oder Verpressen auf verschiedene Dicken des Maschenwerkes erfolgen, wodurch die Porosität verändert werden kann. Hierdurch kann außerdem eine zusätzliche Steifigkeit des Maschenwerkes erreicht werden.

Um die Korrosionsbeständigkeit des Maschenwerkes zu gewährleisten, ist es von Vorteil, das Maschenwerk zusätzlich mit Zink oder Aluminium zu beschichten. Maschenwerke aus Edelstahl benötigen keine solche Beschichtung. Die Maschenwerklage soll zusätzlich zu den oben genannten Aufgaben außerdem die Aufnahme des Absorbermaterials beim Fertigungsprozess der Abschirmung sicherstellen.

Hierzu wird eine Art Vertiefung oder Tasche, etwa in der Tiefe der Dicke des Absorbermaterials, in das Maschenwerk gepresst, in die das Absorbermaterial eingelegt werden kann. Die Tiefe der Tasche ergibt einen definierten Abstand der Geflechtlage zum Abschluss- bzw. Trägerblech, der in einer bevorzugten Ausführungsform mindestens 5 mm betragen sollte. Je größer der Abstand zwischen dem Maschenwerk und dem Abschlussblech gewählt wird, umso mehr wird die Frequenzabsorptionskurve zu niedrigeren Frequenzbereichen verlagert. Somit kann durch geeignete Wahl dieses Abstands die Absorption den Erfordernissen entsprechend angepasst werden.

Das Absorbermaterial übernimmt in dem Mehrlagenaufbau der Abschirmung die Aufgabe der restlichen Absorption der durch das Maschenwerk gelangenden Schallwellen. Hierfür kommt ein Faserwerkstoffe (Basaltwolle 960g/m³) zum Einsatz. Um hier den Grad der Absorption in gewünschte Frequenzbereiche verschieben zu können, kann das Absorbermaterial ein- oder mehrlagig sein. Es kann außerdem unterschiedliche Dichten im Lagenverbund haben, um einen möglichst breiten Frequenzbereich abdecken zu können.

Durch eine zusätzliche Beschichtung des Maschenwerkes kann außerdem die Reflektion der Wärme erhöht und die thermische Abschirmwirkung somit verbessert werden.

Durch Verwendung von temperaturbeständigen Materialien für die Außenlagen in Verbindung mit Basalt- oder Silica-Fasern für die Absorberlage der erfindungsgemäßen Abschirmung ist eine direkte Verschraubung auf heißen Motorbauteilen wie Turbolader, Krümmer, Katalysator/Schalldämpfer etc. möglich. Herkömmliche akustisch und thermisch wirksame Abschirmungen können dagegen nur auf kalten Fahrzeugbauteilen wie z.B. Karosserie, Hauben, Kunststoffteilen etc. verbaut werden.

## Patentansprüche

1. Schutzschild zur thermischen und akustischen Abschirmung eines Bauteils (8) einer Verbrennungskraftmaschine, umfassend:
- ein Metallnetz (2) mit einer Vielzahl von Durchgangsöffnungen;
- mindestens eine Absorberlage (4) aus einem Schall-absorbierenden Material; und
- ein Trägerblech (6);
wobei
- das Metallnetz (2) auf der dem Bauteil (8) zugewandten Seite des Schutzschildes angeordnet ist;
- die mindestens eine Absorberlage (4) zwischen dem Metallnetz (2) und dem Trägerblech (6) angeordnet ist; und
- das Trägerblech (6) in seinem Randbereich (10) um den Rand des Metallnetzes (2) umgefalzt ist; und
- wobei das Schall-absorbierende Material einen Faserwerkstoff umfasst; **dadurch gekennzeichnet, dass**
- der Faserwerkstoff Basaltwolle mit einem spezifischen Gewicht von etwa 960 g/m³ ist.

2. Schutzschild nach Anspruch 1, wobei das Metallnetz (2) eine Vertiefung aufweist, und die mindestens eine Absorberlage (4) innerhalb dieser Vertiefung angeordnet ist.

3. Schutzschild nach Anspruch 2, wobei der Abstand zwischen dem Metallnetz (2) und dem Trägerblech (6) innerhalb der Vertiefung mindestens etwa 5 mm beträgt.

4. Schutzschild nach einem der vorhergehenden Ansprüche, wobei die Gesamtfläche der Durchgangsöffnungen in dem Metallnetz (2) zwischen etwa 20 bis etwa 30 % der Gesamtfläche des Metallnetzes (2) beträgt.

5. Schutzschild nach einem der vorhergehenden Ansprüche, wobei das Trägerblech (6) ein aluminiertes Stahlblech mit einer Dicke von etwa 0,4 mm ist.

6. Schutzschild nach einem der vorhergehenden Ansprüche, wobei das Metallnetz (2) ein Drahtgeflecht aus aluminiertem Metalldraht aufweist.

7. Schutzschild nach einem der Ansprüche 1 bis 5, wobei das Metallnetz (2) ein Drahtgeflecht aus verzinktem Metalldraht aufweist.

8. Schutzschild nach einem der Ansprüche 1 bis 5, wobei das Metallnetz (2) ein Drahtgeflecht aus Edelstahldraht aufweist.

9. Schutzschild nach einem der vorhergehenden Ansprüche, wobei die mindestens eine Absorberlage (4) eine mehrschichtige Verbundlage ist.

10. Schutzschild nach einem der vorhergehenden Ansprüche, wobei das Trägerblech (6) auf der Seite, die der mindestens einen Absorberlage (4) zugewandt ist, eine Schall-absorbierende Oberflächenstruktur (12) aufweist.

11. Schutzschild nach einem der vorhergehenden Ansprüche, wobei im Randbereich (10) Befestigungsmittel für eine Anbringung des Schutzschilds vorgesehen sind.

## Claims

1. Protective shield for the thermal and acoustic shielding of a component (8) of an internal combustion engine, comprising:
- a metal net (2) with a multiplicity of through apertures;
- at least one absorber layer (4) of a sound-absorbing material; and
- a carrier plate (6);
wherein
- the metal net (2) is arranged on the side of the protective shield facing the component (8);
- the at least one absorber layer (4) is arranged between the metal net (2) and the carrier plate (6); and
- the carrier plate (6) in its edge region (10) is folded over about the edge of the metal net (2); and
- wherein the sound-absorbing material comprises a fibre material; **characterized in that**
- the fibre material is basalt wool with a specific weight of approximately 960 g/m³.

2. The protective shield according to claim 1, wherein the metal net (2) comprises a depression, and wherein the at least one absorber layer (4) is arranged within this depression.

3. The protective shield according to claim 2, wherein the distance between the metal net (2) and the carrier plate (6) within the depression amounts to at least approximately 5 mm.

4. The protective shield according to any one of the preceding claims, wherein the total area of the through apertures in the metal net (2) amounts to between approximately 20 to approximately 30% of the total area of the metal net (2).

5. The protective shield according to any one of the preceding claims, wherein the carrier plate (6) is an aluminized steel plate with a thickness of approximately 0.4 mm.

6. The protective shield according to any one of the preceding claims, wherein the metal net (2) comprises a wire mesh of aluminized metal wire.

7. The protective shield according to any one of the claims 1 to 5, wherein the metal net (2) comprises a wire mesh of galvanized metal wire.

8. The protective shield according to any one of the claims 1 to 5, wherein the metal net (2) comprises a wire mesh of stainless steel wire.

9. The protective shield according to any one of the preceding claims, wherein the at least one absorber layer (4) is a multi-layer composite layer.

10. The protective shield according to any one of the preceding claims, wherein the carrier plate (6) comprises a sound-absorbing surface structure (12) on the side facing the at least one absorber layer (4).

11. The protective shield according to any one of the preceding claims, wherein fastening means for attachment of the protective shield are provided in the edge region (10).

## Revendications

1. Ecran de protection pour le blindage thermique et acoustique d'un composant (8) d'un moteur à combustion interne, comprenant :
- un réseau métallique (2) avec une pluralité d'orifices de passage ;
- au moins une couche absorbante (4) en une matière à absorption acoustique ; et
- une tôle support (6) ;
- le réseau métallique (2) étant disposé sur le côté de l'écran de protection qui fait face au composant (8) ;
- l'au moins une couche absorbante (4) étant disposée entre le réseau métallique (2) et la tôle support (6) ; et
- la tôle support (6) étant repliée dans sa zone marginale (10) autour du bord du réseau métallique (2) ; et
- la matière à absorption acoustique comprenant une matière fibreuse ;
**caractérisé en ce que**
la matière fibreuse est de la laine de basalte, avec un poids spécifique de 960 g/m³.

2. Ecran de protection selon la revendication 1, le réseau métallique comportant un creux et l'au moins une couche absorbante (4) étant disposée à l'intérieur dudit creux.

3. Ecran de protection selon la revendication 2, l'écart entre le réseau métallique (2) et la tôle support (6) à l'intérieur du creux étant d'au moins 5 mm.

4. Ecran de protection selon l'une quelconque des revendications précédentes, la surface totale des orifices de passage dans le réseau métallique (2) étant comprise entre environ 20 à environ 30 % de la surface totale du réseau métallique (2).

5. Ecran de protection selon l'une quelconque des revendications précédentes, la tôle support (6) étant une tôle d'acier aluminiée d'une épaisseur d'environ 0,4 mm.

6. Ecran de protection selon l'une quelconque des revendications précédentes, le réseau métallique (2) comportant un treillis en fil métallique aluminié.

7. Ecran de protection selon l'une quelconque des revendications précédentes, le réseau métallique (2) comportant un treillis en fil métallique galvanisé.

8. Ecran de protection selon l'une quelconque des revendications 1 à 5, le réseau métallique (2) comportant un treillis en fil métallique en acier fin.

9. Ecran de protection selon l'une quelconque des revendications précédentes, l'au moins une couche absorbante (4) étant une couche composite multicouches.

10. Ecran de protection selon l'une quelconque des revendications précédentes, la tôle support (6) comportant sur le côté qui fait face à l'au moins une couche absorbante (4) une structure superficielle à absorption acoustique (12).

11. Ecran de protection selon l'une quelconque des revendications précédentes, dans la zone marginale (10) étant prévus des moyens de fixation pour le montage d'un écran de protection.
